# EUROPÄISCHE PATENTSCHRIFT

(11) **EP 1 447 577 B1**
(45) Veröffentlichungstag und Bekanntmachung des Hinweises auf die Patenterteilung: **16.11.2005**
(21) Anmeldenummer: 04000571.2
(22) Anmeldetag: 14.01.2004
(51) Int. Cl.: F16B 43/00, F16M 7/00

(54) **Distanzelement, insbesondere Distanzscheibe**
Spacer washer
Rondelle de distance

(30) Priorität: 12.02.2003 DE 10305712
(43) Veröffentlichungstag der Anmeldung: 18.08.2004
(73) Patentinhaber: Bayerische Motoren Werke Aktiengesellschaft, 80809 München (DE)
(72) Erfinder: Bleicher, Stephan, 84069 Schierling (DE); Vilsmeier, Gerd, 84079 Bruckberg (DE)

(56) Entgegenhaltungen:
- EP-A- 0 984 218
- US-A- 4 809 421
- US-A- 4 997 328

## Beschreibung

Die vorliegende Erfindung betrifft ein Distanzelement zum Einbringen zwischen zwei miteinander zu verschraubende Bauteile.

Ein derartiges Distanzelement ist aus der EP 984 218 A1 bekannt.

Bei einer Vielzahl von Anwendungen, bei denen zwei Bauteile miteinander verschraubt werden, kommen Distanzscheiben bzw. Distanzelemente zur Sicherstellung einer ordnungsgemäßen Relativpositionierung der Bauteile zum Einsatz. Beispielsweise müssen bei Kegelradgetrieben das Kegelritzel und das Tellerrad sehr exakt zueinander positioniert sein, um einen einwandfreien "Lauf" der Verzahnung sicherzustellen. Das Zahnflankenspiel bzw. die Verzahnungsvorspannung wird häufig durch Distanzscheiben erreicht, die zwischen den Zahnkranz des Tellerrads und den Tellerradträger eingebracht werden. Häufig sind bei derartigen Bauteilverschraubungen zwei oder mehrere entlang eines Schraubflanschs angeordnete Schraubbolzen vorgesehen. Üblicherweise werden für solche Verschraubungen ringförmige Distanzscheiben verwendet, die sich über den gesamten Flansch erstrecken und die im Bereich der Schraubbolzen Ausnehmungen zur Aufnahme der Schraubbolzen haben. Für den Einbau bzw. Ausbau der Distanzscheiben ist es dann erforderlich, alle Schraubbolzen vollständig zu lösen und die miteinander zu verschraubenden Bauteile zu trennen.

Aufgabe der Erfindung ist es, ein Distanzelement für zwei miteinander zu verschraubende Bauteile zu schaffen, das im montierten Zustand die Schraubbolzen zumindest teilweise umgreift und das zwischen die miteinander zu verschraubenden Bauteile eingebracht werden kann und zwar ohne dass die Schraubbolzen vollständig gelöst werden müssen.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem blechartigen Distanzelement aus, das zwischen zwei miteinander durch Schraubbolzen zu verschraubende Bauteile eingebracht wird. Das Distanzelement weist entsprechend der Anzahl der Schraubbolzen Ausnehmungen auf, die jeweils einem Schraubbolzen zugeordnet sind und die im montierten Zustand den jeweiligen Schraubbolzen teilweise umgreifen. Der Kern der Erfindung besteht nun darin, dass die Ausnehmungen zu einer Seite hin offen und so gestaltet sind, dass das Distanzelement bei locker eingeschraubten Schraubbolzen von außen zwischen die Bauteile einschiebbar ist.

Vorzugsweise bildet eine der Ausnehmungen einen "fiktiven Momentanpol". Die Offnungsrichtungen der anderen Ausnehmungen verlaufen im wesentlichen senkrecht zu einem sich zwischen dem Momentanpol und der jeweils betrachteten Ausnehmung erstreckenden Polstrahl. Dadurch ist ein einfaches Einschieben des Distanzelements sichergestellt. Zum Einbringen des Distanzelements zwischen die zwei locker verschraubten Bauteile wird das Distanzelement zunächst mit der den Momentanpol bildenden Ausnehmung an den zugeordneten Schraubbolzen angesetzt. Anschließend wird das Distanzelement um den Momentanpol bzw. den zugeordneten Schraubbolzen zu den beiden Bauteilen hin gedreht. Das Distanzelement kann also durch Drehen um den Momentanpol praktisch kraftfrei zwischen die Bauteile eingeschoben werden.

Das Distanzelement hat die Form eines Kreisringsektors.

Vorzugsweise erstreckt sich das Distanzelement über einen Winkelbereich, der kleiner als 180° ist.

Zusammenfassend lässt sich die Lösung als zweiteilige Distanzscheibe beschreiben. Vor einem Flansch sind üblicherweise zwei "180°-" Distanzscheiben vorgesehen. Bei kreis- bzw. ringförmigen Flanschen sind die beiden Distanzscheiben spiegelsymmetrisch und erstrecken sich jeweils über annähernd einen Halbkreis.

Die Distanzscheibe kann beispielsweise aus einem rostfreien Stahlblech hergestellt sein.

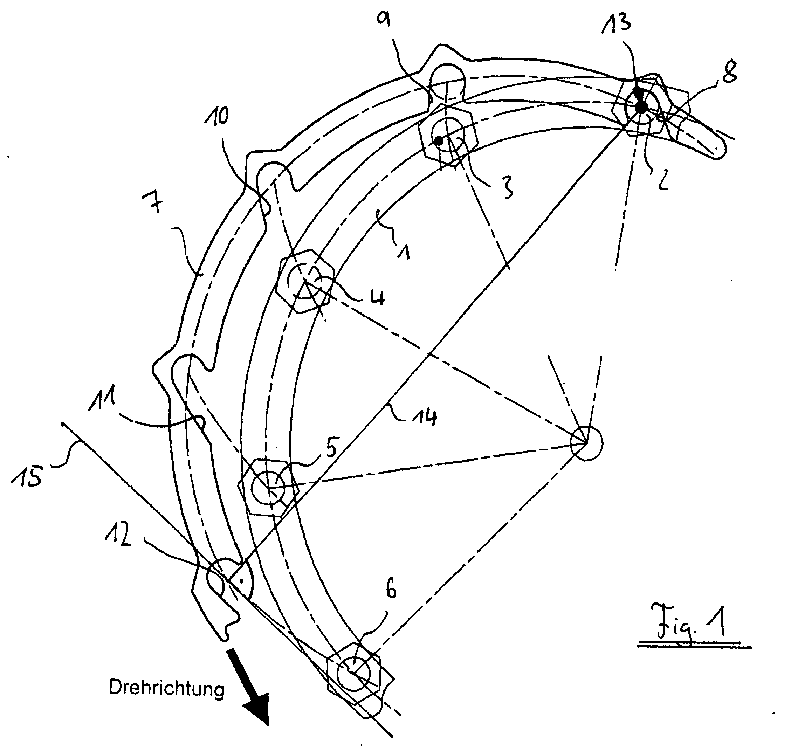

Im folgenden wir die Erfindung im Zusammenhang mit der Zeichnung näher erläutert. Die einzige Figur 1 zeigt ein Ausführungsbeispiel einer kreisringförmigen Distanzscheibe.

Figur 1 zeigt einen kreisförmigen Flansch 1 über dessen Umfang verteilt mehrere Schraubbolzen 2 - 6 angeordnet sind. Ferner ist ein flaches, blechartiges Distanzelement 7 vorgesehen, das sich etwa über einen Winkelbereich von 150° erstreckt. Das Distanzelement 7 weist Ausnehmungen 8 - 12 auf, die zur Innenseite des Distanzelementes 7 hin offen sind.

Die "Öffnungsrichtung" der Ausnehmungen 9 - 12 hängt von der Lage der Ausnehmungen 9 - 12 in Bezug auf die Ausnehmung 8 ab. Der Mittelpunkt der Ausnehmung 8 bildet nämlich einen Momentanpol 13. Wie in Figur 1 exemplarisch im Zusammenhang mit der Ausnehmung 12 erläutert ist, ist die Richtung der einseitig offenen Ausnehmungen 9 - 12 im wesentlichen senkrecht zu dem jeweils zugeordneten Polstrahl, das heißt zur Verbindungslinie der betrachteten Ausnehmung 12 und dem Momentanpol 13. Das Distanzelement kann daher sehr einfach montiert werden. Es wird zunächst mit derjenigen Ausnehmung, welche den Momentanpol 13 bildet, an den zugeordneten Schraubbolzen 2 angesetzt. Anschließend wird das Distanzelement 7 um den Momentanpol 13 bzw. den zugeordneten Schraubbolzen "nach innen" gedreht, wobei die übrigen Ausnehmungen 9 - 12 auf die zugeordneten Schraubbolzen 3 - 6 aufgeschoben werden.

## Patentansprüche

1. Distanzelement (7) zum Einbringen zwischen zwei Bauteile, die durch mindestens zwei Schraubbolzen (2 - 6) miteinander verschraubt werden,
wobei das Distanzelement (7) mindestens zwei Ausnehmungen (8 - 12) aufweist, die jeweils einem der Schraubbolzen (2 - 6) zugeordnet sind und die im montierten Zustand den jeweiligen Schraubbolzen (2 - 6) teilweise umgreifen,
wobei die Ausnehmungen (8 - 12) zu einer Seite hin offen und so gestaltet sind, dass das Distanzelement (7) bei locker eingeschraubten Schraubbolzen (2 - 6) von außen zwischen die Bauteile einschiebbar ist
**dadurch gekennzeichnet, dass**
das Distanzelement (7) im wesentlichen die Form eines Kreisringsektors hat.

2. Distanzelement (7) nach Anspruch 1, wobei der Mittelpunkt einer der Ausnehmungen (8) einen Momentanpol (13) bildet und die Öffnungsrichtung (15) der anderen Ausnehmungen jeweils im wesentlichen senkrecht zu einem zugeordneten, sich zwischen dem Momentanpol (13) und der betrachteten Ausnehmung (9 - 12) erstreckenden Polstrahl (14) ist, so dass das Distanzelement (7) zunächst mit der den Momentanpol (13) bildenden Ausnehmung (8) an den zugeordneten Schraubbolzen (2) angesetzt und durch Drehen um diesen Schraubbolzen (2) zwischen die Bauteile eingeschoben werden kann.

3. Distanzelement (7) nach einem der Ansprüche 1 oder 2, wobei sich das Distanzelement (7) über einen Winkelbereich erstreckt, der kleiner als 180° ist.

## Claims

1. A spacer element (7) for inserting between two components screwed together by at least two screw bolts (2 - 6), wherein the spacer element (7) has at least two recesses (8 - 12), each of which is associated with a respective screw bolt (2 - 6) and partly surrounds the said bolt (2 - 6) when in the assembled state,
wherein the recesses (8 - 12) are open at one side and shaped so that when the bolt (2 - 6) is loosely screwed in, the spacer element (7) is insertable between the components from the exterior, **characterised in that** the spacer element (7) has substantially the shape of a circular sector.

2. A spacer element (7) according to claim 1, wherein the centre point of one of the recesses (8) forms an instantaneous centre of rotation (13) and the direction (15) in which the other recesses open is in each case substantially at right angles to an associated radius vector (14) extending between the instantaneous centre (13) and the recess (9 - 12) under consideration, so that the spacer recess (8) forming the instantaneous centre (13) is first placed on the associated screw bolt (2) and rotated around the screw bolt (2) in order to insert the spacer element (7) between the components.

3. A spacer element (7) according to claim 1 or 2, wherein the spacer element (7) extends over an angle range less than 180°.

## Revendications

1. Elément de distance (7) à monter entre deux composants reliés par au moins deux boulons filetés (2-6), cet élément (7) présentant au moins deux évidements (8-12) associés chacun à un des boulons filetés (2-6), de manière à les envelopper en partie à l'état monté, les évidements (8-12) étant ouverts d'un côté et configurés de manière que l'élément de distance (7) peut être glissé entre les composants quand les boulons (2-6) sont desserrés,
**caractérisé en ce que**
l'élément de distance (7) a essentiellement la forme d'un secteur annulaire.

2. Elément de distance (7) selon la revendication 1,
**caractérisé en ce que**
le centre d'un des évidements (8) constitue un pôle instantané (13) et la direction d'ouverture (15) de chacun des autres évidements est essentiellement perpendiculaire à un rayon polaire (14) associé reliant le pôle instantané (13) et l'évidement (9-12) considéré, de sorte que l'élément de distance (7) est d'abord monté avec son évidement (8) constituant le pôle instantané (13) sur le boulon fileté (2) associé, puis, par rotation autour de ce boulon, il peut être glissé entre les composants.

3. Elément de distance (7) selon la revendication 1 ou 2,
**caractérisé en ce que**
l'élément de distance (7) s'étend sur une plage angulaire inférieure à 180°.
